(19)

**Europäisches Patentamt**
**European Patent Office**
**Office européen des brevets**

(11) **EP 4 265 746 A1**

(12) **EUROPEAN PATENT APPLICATION**
published in accordance with Art. 153(4) EPC

(43) Date of publication:
**25.10.2023 Bulletin 2023/43**

(21) Application number: **21911403.0**

(22) Date of filing: **16.12.2021**

(51) International Patent Classification (IPC):
*C21D 8/12* (2006.01)    *C22C 38/34* (2006.01)
*C22C 38/38* (2006.01)    *C22C 38/00* (2006.01)
*C22C 38/28* (2006.01)    *C22C 38/22* (2006.01)
*C22C 38/26* (2006.01)    *H01F 1/147* (2006.01)

(52) Cooperative Patent Classification (CPC):
**C21D 8/12; C22C 38/00; C22C 38/22; C22C 38/26;**
**C22C 38/28; C22C 38/34; C22C 38/38;**
**H01F 1/147;** Y02T 10/64

(86) International application number:
**PCT/KR2021/019221**

(87) International publication number:
**WO 2022/139336 (30.06.2022 Gazette 2022/26)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.12.2020 KR 20200179579**

(71) Applicant: POSCO Co., Ltd
**Pohang-si, Gyeongsangbuk-do 37859 (KR)**

(72) Inventors:
• **KIM, Jaehoon**
  **Pohang-si, Gyeongsangbuk-do 37859 (KR)**
• **SHIN, Suyong**
  **Pohang-si, Gyeongsangbuk-do 37859 (KR)**
• **KOO, Jooyoung**
  **Pohang-si, Gyeongsangbuk-do 37859 (KR)**
• **KIM, Seungil**
  **Pohang-si, Gyeongsangbuk-do 37859 (KR)**

(74) Representative: **Meissner Bolte Partnerschaft**
**mbB**
**Patentanwälte Rechtsanwälte**
**Postfach 86 06 24**
**81633 München (DE)**

(54) **NON-ORIENTED ELECTRICAL STEEL SHEET, AND METHOD FOR MANUFACTURING SAME**

(57)    A non-oriented electrical steel sheet according to an exemplary embodiment of the present invention includes, by wt%: 2.5 to 3.8% of Si, 0.1 to 1.5% of Al, 0.1 to 2.0% of Mn, 0.01 to 0.15% of Cr, and a balance of Fe and inevitable impurities, wherein the non-oriented electrical steel sheet satisfies the following Expression 1.

[Expression 1]

$$[Cr] > ([Al] + [Mn])/[Si]/10$$

(In Expression 1, [Cr], [Al], [Mn], and [Si] represent contents (wt%) of Cr, Al, Mn, and Si, respectively.)

FIG. 1

EP 4 265 746 A1

**Description**

**[Technical Field]**

An exemplary embodiment of the present invention relates to a non-oriented electrical steel sheet and a method for manufacturing the same. More particularly, an exemplary embodiment of the present invention relates to a non-oriented electrical steel sheet that has excellent magnetism regardless of a frequency by forming a Cr-rich layer inside the steel sheet by adding an appropriate amount of Cr element to the steel sheet and controlling cold rolling and final annealing process conditions, and a method for manufacturing the same.

**[Background Art]**

Effective use of electric energy has become a big issue for improving the global environment such as energy saving, a reduction in fine dust generation, and a reduction in greenhouse gas. Since more than 50% of the entire electric energy that is currently being generated is consumed in an electric motor, high efficiency of the electric motor is indispensable to achieve high efficient use of electricity. Recently, in accordance with rapid development of the field of eco-friendly vehicles (hybrid vehicle, plug-in hybrid vehicle, electric vehicle, and fuel cell vehicle), an interest in high efficiency drive motor has rapidly increased, and high efficiency of high efficiency motors for home appliances and super-premium motors for heavy electric appliances has been recognized and government regulations have continued. Therefore, a demand for efficient use of electric energy is higher than ever.

On the other hand, in order to achieve high efficiency of the electric motor, an optimization is significantly important in all areas form selection of materials to design, assembly, and control. In particular, in terms of the material, magnetism characteristics of the electrical steel sheet are most important, and therefore, there is a high demand for low iron loss and high magnetic flux density. The high-frequency low iron loss properties are significantly important for drive motors of vehicles or air conditioning compressors that should be driven not only in the power frequency region but also in the high frequency region. In order to obtain such high-frequency low iron loss properties, it is important to improve a magnetic permeability, in particular, a reduction in magnetic permeability should be small even when the frequency increases. The excellent magnetic permeability is an indispensable property to obtain high-frequency low iron loss because magnetization is fast even under a magnetization force, and a low frequency dependence of the magnetic permeability means that the motor efficiency does not decrease rapidly even when the motor rotates at a higher speed.

In general, in a manufacturing process of an electrical steel sheet, a large amount of resistivity elements such as Si, Al, and Mn are added and a grain diameter is reduced to reduce eddy current loss. Meanwhile, since an eddy current only passes through a surface layer of the steel sheet as the frequency increases, when the resistivity element of the surface layer is increased or the grain diameter of the surface layer is controlled to be small, the frequency dependence of the magnetic permeability is reduced, such that the high-frequency iron loss may be improved. However, a uniform steel sheet in a thickness direction is obtained by a general manufacturing method, and thus, the frequency dependence of the magnetic permeability is inevitably large, and the method of diffusing resistivity elements on the surface using CVD or the like has a limitation in that it is difficult to use commercially because an increase in cost is too large.

**[Disclosure]**

**[Technical Problem]**

An exemplary embodiment of the present invention provides a non-oriented electrical steel sheet and a method for manufacturing the same. More particularly, an exemplary embodiment of the present invention provides a non-oriented electrical steel sheet that has excellent magnetism regardless of a frequency by forming a Cr-rich layer inside the steel sheet by adding an appropriate amount of Cr element to the steel sheet and controlling cold rolling and final annealing process conditions, and a method for manufacturing the same.

**[Technical Solution]**

An exemplary embodiment of the present invention provides a non-oriented electrical steel sheet including, by wt%: 2.5 to 3.8% of Si, 0.1 to 1.5% of Al, 0.1 to 2.0% of Mn, 0.01 to 0.15% of Cr, and a balance of Fe and inevitable impurities, wherein the non-oriented electrical steel sheet satisfies the following Expression 1.

[Expression 1]

$$[Cr] > ([Al] + [Mn])/[Si]/10$$

(In Expression 1, [Cr], [Al], [Mn], and [Si] represent contents (wt%) of Cr, Al, Mn, and Si, respectively.)

The non-oriented electrical steel sheet according to an exemplary embodiment of the present invention includes a Cr-rich layer formed to have a thickness of 1/50 or less of the total thickness of the steel sheet in an inner direction of the steel sheet from a surface of the steel sheet, and a substrate, wherein an average grain diameter in the Cr-rich layer is 50 to 95% of an average grain diameter in the substrate.

The non-oriented electrical steel sheet according to an exemplary embodiment of the present invention may further include one or more of 0.005 to 0.08 wt% of P, 0.01 to 0.08 wt% of Sn, and 0.005 to 0.05 wt% of Sb.

The non-oriented electrical steel sheet according to an exemplary embodiment of the present invention may further include one or more of 0.0040 wt% or less of C, 0.0040 wt% or less of S, 0.0040 wt% or less of N, and 0.0040 wt% or less of Ti.

The non-oriented electrical steel sheet according to an exemplary embodiment of the present invention may further include one or more of 0.03 wt% or less of Mo, 0.0050 wt% or less of B, 0.0050 wt% or less of V, 0.0050 wt% or less of Ca, 0.0050 wt% or less of Nb, and 0.0050 wt% or less of Mg.

The non-oriented electrical steel sheet according to an exemplary embodiment of the present invention may further include an insulating layer positioned on the surface of the steel sheet.

The non-oriented electrical steel sheet according to an exemplary embodiment of the present invention may have a frequency dependence ($\alpha$) of a magnetic permeability of -5 or more when measured in a range of 200 Hz to 800 Hz.

Here, the frequency dependence ($\alpha$) of the magnetic permeability is determined from an average slope (H/m/Hz) obtained by measuring magnetic permeability values at 200 Hz, 400 Hz, 600 Hz, and 800 Hz at a magnetic flux density of 1 T.

A resistivity of the non-oriented electrical steel sheet according to an exemplary embodiment of the present invention may be 45 $\mu\Omega$·cm or more.

An exemplary embodiment of the present invention provides a method for manufacturing a non-oriented electrical steel sheet, the method including: manufacturing a hot-rolled sheet by hot rolling a slab including, by wt%: 2.5 to 3.8% of Si, 0.1 to 1.5% of Al, 0.1 to 2.0% of Mn, 0.01 to 0.15% of Cr, and a balance of Fe and inevitable impurities, and satisfying the following Expression 1; manufacturing a cold-rolled sheet by cold rolling the hot-rolled sheet; and subjecting the cold-rolled sheet to final annealing.

[Expression 1]

$$[Cr] > ([Al] + [Mn])/[Si]/10$$

(In Expression 1, [Cr], [Al], [Mn], and [Si] represent contents (wt%) of Cr, Al, Mn, and Si, respectively.)

In the manufacturing of the cold-rolled sheet, a maximum rolling rate may be 10 m/s or more, and a temperature of a surface of the steel sheet may be held at 150°C or higher for 3 minutes or longer.

In the final annealing, the cold-rolled sheet may be cooled at a cooling rate of 10 to 40°C/s up to 700°C after a soaking temperature.

The method for manufacturing a non-oriented electrical steel sheet may further include, before the manufacturing of the hot-rolled sheet, heating the slab to 1,100 to 1,250°C.

The method for manufacturing a non-oriented electrical steel sheet may further include, after the manufacturing of the hot-rolled sheet, annealing the hot-rolled sheet at 850 to 1,150°C.

A reduction ratio in the cold rolling may be 70 to 95%.

In the final annealing, soaking may be performed at 800 to 1,070°C.

[Advantageous Effects]

In the non-oriented electrical steel sheet according to an exemplary embodiment of the present invention, an appropriate amount of Cr is added to the steel sheet to form a Cr-rich layer, such that a frequency dependence of a magnetic permeability may be significantly reduced.

When a motor is manufactured using the non-oriented electrical steel sheet according to an exemplary embodiment of the present invention, the efficiency of the motor is excellent because the motor may be driven with a small current even during high-speed rotation.

Ultimately, the non-oriented electrical steel sheet according to an exemplary embodiment of the present invention contributes to manufacturing motors of eco-friendly vehicles, motors of high efficiency home appliances, and super-premium electric motors.

**[Description of the Drawings]**

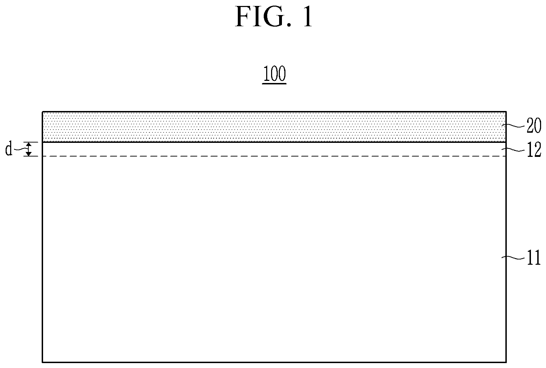

FIG. 1 is a schematic side cross-sectional view of a non-oriented electrical steel sheet according to an exemplary embodiment of the present invention.

**[Mode for Invention]**

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present invention.

Terminologies used herein are to mention only a specific exemplary embodiment, and are not to limit the present invention. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

Unless defined otherwise, all terms including technical terms and scientific terms used herein have the same meanings as understood by those skilled in the art to which the present invention pertains. Terms defined in a generally used dictionary are additionally interpreted as having the meanings matched to the related technical document and the currently disclosed contents, and are not interpreted as ideal or very formal meanings unless otherwise defined.

In addition, unless otherwise stated, % means wt%, and 1 ppm is 0.0001 wt%.

In an exemplary embodiment of the present invention, the meaning of "further including an additional element" means that the additional element is substituted for a balance of iron (Fe) by the amount of additional element added.

Hereinafter, exemplary embodiments of the present invention will be described in detail so that those skilled in the art to which the present invention pertains may easily practice the present invention. However, the present invention may be implemented in various different forms and is not limited to exemplary embodiments described herein.

In an exemplary embodiment of the present invention, a Cr-rich layer is formed inside a steel sheet by adding an appropriate amount of Cr element to a non-oriented steel sheet and controlling cold rolling and final annealing process conditions, such that magnetism is improved regardless of a frequency.

A non-oriented electrical steel sheet according to an exemplary embodiment of the present invention includes, by wt%: 2.5 to 3.8% of Si, 0.1 to 1.5% of Al, 0.1 to 2.0% of Mn, 0.01 to 0.15% of Cr, and a balance of Fe and inevitable impurities.

First, the reason for limiting the components of the non-oriented electrical steel sheet will be described.

Si: 2.5 to 3.8 wt%

Silicon (Si) serves to increase resistivity of a material to reduce iron loss. When the amount of Si added is too small, a high-frequency iron loss improvement effect is insufficient, and when the amount of Si added is too large, hardness of a material increases, and thus, productivity and punching properties are deteriorated, which is not preferable. More specifically, Si may be included in an amount of 2.6 to 3.5 wt%.

Al: 0.1 to 1.5 wt%

Aluminum (Al) serves to increase the resistivity of the material to reduce iron loss. When the amount of Al added is too small, there is no effect of reducing high-frequency iron loss, and fine nitrides are formed, which may cause deterioration of magnetism. On the other hand, when the amount of Al added is too large, problems in all processes such as steelmaking and continuous casting occur, which may cause a significant deterioration of productivity. Therefore, Al may be added within the range described above. More specifically, Al may be included in an amount of 0.3 to 1.0 wt%.

Mn: 0.1 to 2.0 wt%

Manganese (Mn) serves to increase the resistivity of the material to improve iron loss and to form sulfides. When the amount of Mn added is too small, fine MnS is precipitated, which may cause deterioration of magnetism. On the other hand, when the amount of Mn added is too large, formation of a {111} texture that is unfavorable for magnetism is promoted, and thus, a magnetic flux density may be reduced. Therefore, Mn may be added within the range described above. More specifically, Mn may be included in an amount of 0.2 to 1.5 wt%.

Resistivity: 45 $\mu\Omega\cdot$cm or more

The resistivity is a value calculated from 13.25 + 11.3×([Si]+[Al]+[Mn]/2). In this case, [Si], [Al], and [Mn] represent contents (wt%) of Si, Al, and Mn, respectively. The higher the resistivity, the lower the iron loss. When the resistivity is too low, iron loss is deteriorated, and it is difficult to use the non-oriented electrical steel sheet as a high efficiency motor. More specifically, the resistivity may be 50 to 80 $\mu\Omega\cdot$cm.

Cr: 0.010 to 0.150 wt%

Chromium (Cr) serves to increase the resistivity of the material and to reduce the iron loss, and may be concentrated on the surface by controlling cold rolling conditions and final annealing conditions to form a Cr-rich layer. When the amount of Cr included is too small, a surface concentration effect does not occur, and when the amount of Cr added is too large, Cr is evenly distributed over the entire thickness rather than surface concentration. More specifically, Cr may be included in an amount of 0.030 to 0.100 wt%.

In an exemplary embodiment of the present invention, the non-oriented electrical steel sheet may satisfy the following Expression 1.

$$[Cr] > ([Al] + [Mn])/[Si]/10$$

(In Expression 1, [Cr], [Al], [Mn], and [Si] represent contents (wt%) of Cr, Al, Mn, and Si, respectively.)

Expression 1 is a relational expression that defines a correlation between Cr, Al, Mn, and Si, and when Expression 1 is not satisfied, that is, when the amount of Cr or Si added is small or the amount of Al or Mn added is too large, various solid solutions are formed, such that a Cr-rich layer is not properly formed, and it is difficult to achieve the object of the present invention to improve magnetism regardless of a frequency.

The non-oriented electrical steel sheet according to an exemplary embodiment of the present invention may further include one or more of 0.005 to 0.08 wt% of P, 0.01 to 0.08 wt% of Sn, and 0.005 to 0.05 wt% of Sb. In a case where additional elements are further included, these additional elements may be included by replacing the balance of Fe.

P: 0.005 to 0.08 wt%

Phosphorus (P) is concentrated on the surface and serves to control a fraction of an internal oxide layer. When the amount of P added is too small, it may be difficult to form a uniform internal oxide layer. When the amount of P added is too large, a melting point of Si-based oxide may fluctuate, and an internal oxide layer may be rapidly formed. Therefore, the content of P may be controlled within the range described above. More specifically, P may be included in an amount of 0.005 to 0.07 wt%.

Sn: 0.01 to 0.08 wt%

Tin (Sn) segregates on a surface and grain boundaries of the steel sheet to suppress surface oxidation during annealing, thereby improving a texture. When the amount of Sn added is too small, the effect may not be sufficient. When the amount of Sn added is too large, Sn segregates on the grain boundaries and toughness is deteriorated, and thus, the productivity is deteriorated compared to magnetism improvement, which is not preferable. More specifically, Sn may be included in an amount of 0.02 to 0.07 wt%.

Sb: 0.005 to 0.05 wt%

Antimony (Sb) segregates on the surface and grain boundaries of the steel sheet to suppress surface oxidation during annealing, thereby improving a texture. When the amount of Sb added is too small, there is no the effect, and when the amount of Sb added is 0.05% or more, Sb segregates on the grain boundaries and toughness of the material is deteriorated, and thus, the productivity is deteriorated compared to magnetism improvement, which is not preferable. More specifically, Sb may be included in an amount of 0.01 to 0.03 wt%.

The non-oriented electrical steel sheet according to an exemplary embodiment of the present invention may further include one or more of 0.03 wt% or less of Mo, 0.0050 wt% or less of B, 0.0050 wt% or less of V, 0.0050 wt% or less of Ca, 0.0050 wt% or less of Nb, and 0.0050 wt% or less of Mg.

These elements react with C, S, N, and the like, which are inevitably included, to form fine carbides, nitrides, or sulfides, which may adversely affect magnetism, and therefore, upper limits thereof may be limited as described above.

Other impurities

In addition to the elements described above, impurities that are inevitably incorporated, such as carbon (C), sulfur (S), nitrogen (N), and titanium (Ti), may be included.

C, N, and Ti may be limited because these elements form carbonitrides, which inhibits magnetic domain movement, and S may form sulfides, which may cause deterioration of grain growth, and therefore, upper limits of these elements may be limited. Each of these elements may be included in an amount of 0.0040 wt% or less.

N combines with Ti, Nb, and V to form nitrides and serves to reduce grain growth.

C reacts with N, Ti, Nb, V, and the like to form fine carbides and serves to inhibit grain growth and magnetic domain movement.

S forms sulfides, which causes deterioration of grain growth.

When the impurity elements are further included, one or more of C, S, N, Ti, Nb, and V may be included in an amount of 0.004 wt% or less, respectively.

FIG. 1 illustrates a schematic side cross-sectional view of a non-oriented electrical steel sheet according to an exemplary embodiment of the present invention. The non-oriented electrical steel sheet of FIG. 1 is merely for illustrating the present invention, and the present invention is not limited thereto. Therefore, the structure of the non-oriented electrical steel sheet may be variously modified.

As illustrated in FIG. 1, a non-oriented electrical steel sheet 100 according to an exemplary embodiment of the present invention includes a Cr-rich layer 12 formed to have a thickness of 1/50 or less of the total thickness of the steel sheet in an inner direction of the steel sheet from a surface of the steel sheet, and a substrate 11. By including the Cr-rich layer 12, there is an effect of increasing the resistivity, and thus, even when a frequency increases, a change in magnetic permeability decreases.

A thickness d of the Cr-rich layer 12 may be 1/50 or less of the total thickness of the steel sheet. When the Cr-rich layer 12 is formed to be too thick, the amount of Cr to be concentrated decreases, a grain diameter in the Cr-rich layer 12 may not be sufficiently small. More specifically, the thickness d of the Cr-rich layer 12 may be 1/100 to 1/50 of the total thickness of the steel sheet.

In an exemplary embodiment of the present invention, the non-oriented electrical steel sheet 100 has a concentration gradient of Cr in the inner direction from the surface. The Cr-rich layer 12 is present in the range of 1/50 or less of the total thickness of the steel sheet, and a larger amount of Cr may be included in the Cr-rich layer 12 than in the substrate 11 of the steel sheet. More specifically, Cr may be included in an amount of more than 0.15 wt%. In this case, the content of Cr refers to an average content with respect to the total thickness of the Cr-rich layer 12. Contents of the remaining elements may be the same as those in the non-oriented electrical steel sheet 100 described above. Since the Cr-rich layer 12 is formed to be thinner than the total thickness of the electrical steel sheet, the content of Cr in the substrate 11 may be substantially the same as the content of Cr in the non-oriented electrical steel sheet 100.

As such, the Cr-rich layer 12 includes a larger amount of Cr than the substrate 11, which makes grains in the Cr-rich layer 12 finer than those of the substrate 11. The content of Cr and the refined grains in the Cr-rich layer 12 reduce a change in magnetic permeability even when the frequency increases due to the skin effect in which an eddy current flows along a surface layer.

Specifically, an average grain diameter in the Cr-rich layer may be 50 to 95% of an average grain diameter in the substrate. Specifically, the average grain diameter in the Cr-rich layer may refer to an average grain diameter at an intermediate thickness (d/2) of the Cr-rich layer 12, and the average grain diameter in the substrate may refer to an average grain diameter at an intermediate thickness (t/2) of the steel sheet. A grain measurement reference plane may be a plane parallel to a rolled plane (ND plane). More specifically, the average grain diameter in the Cr-rich layer may be 80 to 93% of the average grain diameter in the substrate.

Still more specifically, the average grain diameter in the Cr-rich layer may be 55 to 90 $\mu$m, and the average grain diameter in the substrate 11 may be 60 to 100 $\mu$m.

As illustrated in FIG. 1, an insulating layer 20 may be further formed on the Cr-rich layer 12. The insulating layer 20 is formed on a surface of the Cr-rich layer 12, that is, on the outside of the steel sheet, and is distinguished from the Cr-rich layer 12. A thickness of the insulating layer 20 may be 0.7 to 1.0 $\mu$m. Since the insulating layer 20 is widely known in the technical field of the non-oriented electrical steel sheet, a detailed description thereof will be omitted.

In an exemplary embodiment of the present invention, the frequency dependence of the magnetic permeability may be significantly reduced. Specifically, a frequency dependence ($\alpha$) of a magnetic permeability may be -5.0 or more when measured in a range of 200 Hz to 800 Hz.

In this case, the frequency dependence ($\alpha$) of the magnetic permeability is calculated as follows.

([Minimum magnetic permeability in range of 200 Hz to 800 Hz] - [Maximum magnetic permeability in range of 200 Hz to 800 Hz])

Since the frequency dependence ($\alpha$) of the magnetic permeability is small, when a motor is manufactured using the non-oriented electrical steel sheet according to an exemplary embodiment of the present invention, the efficiency of the motor is excellent because the motor may be driven with a small current even during high-speed rotation.

More specifically, the frequency dependence ($\alpha$) of the magnetic permeability may be -4.5 to -1.0.

Still more specifically, a magnetic permeability may be 9,500 to 11,000 H/m when measured at 200 Hz. A magnetic permeability may be 9,000 to 10,000 H/m when measured at 400 Hz. A magnetic permeability may be 8,500 to 9,500 H/m when measured at 600 Hz. A magnetic permeability may be 7,500 to 9,000 H/m when measured at 800 Hz.

A method for manufacturing a non-oriented electrical steel sheet an exemplary embodiment of the present invention includes: manufacturing a hot-rolled sheet by hot rolling a slab including, by wt%: 2.5 to 3.8% of Si, 0.1 to 1.5% of Al, 0.1 to 2.0% of Mn, 0.01 to 0.15% of Cr, and a balance of Fe and inevitable impurities, and satisfying the following Expression 1; manufacturing a cold-rolled sheet by cold rolling the hot-rolled sheet; and subjecting the cold-rolled sheet to final annealing.

[Expression 1]

$$[Cr] > ([Al] + [Mn])/[Si]/10$$

(In Expression 1, [Cr], [Al], [Mn], and [Si] represent contents (wt%) of Cr, Al, Mn, and Si, respectively.)

Hereinafter, each step will be described in detail.

First, a slab is manufactured. Since the reason for limiting the addition ratio of each composition in the slab is the same as the reason for limiting the composition of the non-oriented electrical steel sheet described above, repeated descriptions will be omitted. The composition of the slab is not substantially changed during manufacturing processes such as hot rolling, annealing of the hot-rolled sheet, cold rolling, and final annealing, which will be described below, and thus, the composition of the slab is substantially the same as the composition of the non-oriented electrical steel sheet.

Before the manufacturing of the hot-rolled sheet, the slab may be heated. Specifically, the slab is charged into a heating furnace and the slab is heated to 1,100°C to 1,250°C. When the slab is heated at a temperature exceeding 1,250°C, the precipitate is re-dissolved and may be finely precipitated after hot rolling.

The heated slab is hot-rolled to 2 to 2.3 mm to manufacture a hot-rolled sheet. In the manufacturing of the hot-rolled sheet, a finish annealing temperature may be 800°C to 1,000°C.

After the manufacturing of the hot-rolled sheet, annealing the hot-rolled sheet may be further included. In this case, an annealing temperature of the hot-rolled sheet may be 850 to 1,150°C. When the annealing temperature of the hot-rolled sheet is lower than 850°C, a structure does not grow or grows finely, and thus, the effect of increasing the magnetic flux density is small, and when the annealing temperature exceeds 1,150°C, the magnetic characteristics are rather deteriorated, and the plate shape is deformed, and thus, rolling workability may be deteriorated. More specifically, the temperature may be in a range of 950 to 1,125°C. Still more specifically, the annealing temperature of the hot-rolled sheet is 900 to 1,100°C. The annealing of the hot-rolled sheet is performed to increase an orientation favorable for magnetism, if necessary, and may be omitted.

Next, the hot-rolled sheet is pickled, and the pickled hot-rolled sheet is cold-rolled to obtain a predetermined sheet thickness. A reduction ratio may be applied differently depending on the thickness of the hot-rolled sheet, but the hot-rolled sheet may be cold-rolled so that the final thickness is 0.2 to 0.65 mm by applying a reduction ratio of 70 to 95%. In order to satisfy the reduction ratio, one cold rolling or two or more times of cold rolling with intermediate annealing therebetween may be performed.

In the manufacturing of the cold-rolled sheet, a maximum rolling rate may be 10 m/s or more. When the maximum rolling rate is small, a diffusion rate of Cr to the surface of the steel sheet is slow, and thus, a Cr-rich layer may not be properly formed. More specifically, the maximum rolling rate may be 10 to 20 m/s.

In the manufacturing of the cold-rolled sheet, a temperature of the surface of the steel sheet may be held at 150°C or higher for 3 minutes or longer. The temperature of the steel sheet may be increased by supplying heat from the outside or residual heat in the manufacturing of the hot-rolled sheet or the annealing of the hot-rolled sheet. When the time for the temperature of the surface of the steel sheet to be 150°C or higher is not properly secured, the diffusion rate of Cr to the surface of the steel sheet is slow, and thus, the Cr-rich layer may not be properly formed. More specifically, the temperature of the surface of the steel sheet may be held at 150°C or higher for 3 to 7 minutes.

The final cold-rolled sheet subjected to the cold rolling is subjected to final annealing. In the final annealing, soaking may be performed at 800 to 1,070°C. When a soaking temperature is too low, recrystallization does not occur sufficiently, and when the soaking temperature is too high, the grain diameter becomes too large, which may cause deterioration of the high-frequency iron loss.

When cooling is performed after soaking, the cold-rolled sheet may be cooled at a cooling rate of 10 to 40°C/s up to 700°C after a soaking temperature. When the cooling rate is too fast, the time for Cr to be concentrated in the surface layer is insufficient, and when the cooling rate is too slow, the grain diameter is too increased, which causes deterioration of the high-frequency iron loss. More specifically, the cold-rolled sheet may be cooled at a rate of 15 to 35°C/s.

Thereafter, forming an insulating layer may be further included. Since a method for forming an insulating layer is widely known in the technical field of the non-oriented electrical steel sheet, a detailed description thereof will be omitted.

Hereinafter, preferred Examples and Comparative Examples of the present invention will be described. However, each of the following Examples is merely a preferred example of the present invention, and the present invention is not limited to the following Examples.

Example 1

A slab with the composition as shown in Table 1 was manufactured. C, S, N, Ti, Nb, V, and the like other than the components shown in Table 1 were all controlled to 0.003 wt% or less, and the balance was Fe. The slab was heated to 1,150°C and subjected to hot finish rolling at 850°C to manufacture a hot-rolled sheet having a sheet thickness of 2.0 mm. The hot-rolled sheet subjected to hot rolling was annealed at 1,100°C for 4 minutes and then pickled. Thereafter, the hot-rolled sheet was cold-rolled to have a sheet thickness of 0.25 mm, and then final annealing was performed. The cold rolling maximum rate, the final annealing soaking temperature for holding time at 150°C or higher, the average cooling rate up to 700°C after soaking, and the final steel sheet thickness were controlled as shown in Table 2.

A grain diameter was measured at a portion of 1/50 of the total thickness, a grain diameter was measured at a portion of 1/2 of the total thickness, and the results were summarized in Table 2.

The magnetic permeability values of the manufactured non-oriented electrical steel sheet were measured at 200 Hz, 400 Hz, 600 Hz, and 800 Hz, respectively, and the results were summarized in Table 3. In addition, the frequency dependence was calculated, and the results were summarized in Table 3.

[Table 1]

| Steel type (wt%) | Si | Al | Mn | Resistivity ($\mu\Omega\cdot$cm) | Cr | Whether or not Expression 1 is satisfied |
|---|---|---|---|---|---|---|
| 1 | 3.2 | 0.5 | 0.2 | 56 | 0.020 | X |
| 2 | 3.3 | 0.6 | 0.4 | 60 | 0.045 | ○ |
| 3 | 2.8 | 0.7 | 0.6 | 56 | 0.005 | X |
| 4 | 3.2 | 0.8 | 0.8 | 63 | 0.170 | ○ |
| 5 | 3.3 | 0.9 | 1.0 | 66 | 0.080 | ○ |
| 6 | 3.4 | 1.7 | 1.2 | 78 | 0.045 | X |
| 7 | 2.2 | 0.6 | 1.4 | 53 | 0.050 | X |
| 8 | 3.3 | 0.7 | 2.5 | 73 | 0.075 | X |
| 9 | 3.4 | 0.8 | 0.2 | 62 | 0.060 | ○ |
| 10 | 2.6 | 0.9 | 0.4 | 55 | 0.065 | ○ |
| 11 | 3.0 | 0.5 | 0.6 | 56 | 0.070 | ○ |
| 12 | 2.6 | 0.6 | 0.8 | 54 | 0.075 | ○ |
| 13 | 3.2 | 0.7 | 1.0 | 63 | 0.080 | ○ |
| 14 | 3.3 | 0.8 | 1.2 | 66 | 0.085 | ○ |

[Table 2]

| Steel type | Cold rolling maximum rate (m/s) | Holding time at 150°C or higher during cold rolling (min) | Annealing temperature (°C) | Cooling rate (°C/s) | Thickness (mm) | Substrate grain diameter (μm) | Cr-rich layer grain diameter (μm) |
|---|---|---|---|---|---|---|---|
| 1 | 10 | 4 | 950 | 30 | 0.25 | 62 | 65 |
| 2 | 15 | 5 | 930 | 15 | 0.27 | 68 | 61 |
| 3 | 17 | 3 | 970 | 25 | 0.23 | 75 | 73 |
| 4 | 11 | 5 | 990 | 25 | 0.20 | 69 | 68 |
| 5 | 15 | 4 | 980 | 22 | 0.20 | 65 | 58 |
| 6 | 13 | 4 | 940 | 13 | 0.25 | 61 | 59 |
| 7 | 10 | 4 | 970 | 38 | 0.30 | 85 | 82 |
| 8 | 12 | 4 | 920 | 12 | 0.27 | 58 | 57 |
| 9 | 11 | 7 | 1020 | 27 | 0.25 | 92 | 81 |
| 10 | 8 | 5 | 990 | 45 | 0.30 | 95 | 91 |
| 11 | 10 | 1 | 970 | 8 | 0.25 | 74 | 78 |
| 12 | 12 | 2 | 960 | 31 | 0.35 | 88 | 87 |
| 13 | 15 | 4 | 940 | 35 | 0.23 | 71 | 65 |
| 14 | 15 | 3 | 970 | 11 | 0.20 | 82 | 76 |

[Table 3]

| Steel type | Magnetic permeability at 200 Hz (H/m) | Magnetic permeability at 400 Hz (H/m) | Magnetic permeability at 600 Hz (H/m) | Magnetic permeability at 800 Hz (H/m) | Frequency dependence | Classification |
|---|---|---|---|---|---|---|
| 1 | 9251 | 8544 | 7258 | 6154 | -5.3 | Comparative Example |
| 2 | 9854 | 9547 | 8574 | 8145 | -3.1 | Example |
| 3 | 9536 | 8621 | 7523 | 6487 | -5.1 | Comparative Example |
| 4 | 9985 | 8893 | 7788 | 6834 | -5.3 | Comparative Example |
| 5 | 10258 | 9541 | 8712 | 7952 | -3.9 | Example |
| 6 | 9985 | 8756 | 8123 | 6547 | -5.5 | Comparative Example |
| 7 | 10897 | 9127 | 8537 | 7415 | -5.5 | Comparative Example |
| 8 | 9587 | 8754 | 7569 | 6389 | -5.4 | Comparative Example |
| 9 | 10578 | 9893 | 9307 | 8537 | -3.4 | Example |
| 10 | 9632 | 8421 | 7584 | 6478 | -5.1 | Comparative Example |
| 11 | 9257 | 8713 | 7210 | 6258 | -5.3 | Comparative Example |

(continued)

| Steel type | Magnetic permeability at 200 Hz (H/m) | Magnetic permeability at 400 Hz (H/m) | Magnetic permeability at 600 Hz (H/m) | Magnetic permeability at 800 Hz (H/m) | Frequency dependence | Classification |
|---|---|---|---|---|---|---|
| 12 | 9514 | 8754 | 7325 | 6489 | -5.3 | Comparative Example |
| 13 | 10698 | 9785 | 8941 | 7985 | -4.5 | Example |
| 14 | 9512 | 9149 | 8725 | 8152 | -2.3 | Example |

As shown in Tables 1 to 3, in Examples in which the alloy components and manufacturing process conditions were satisfied, it could be confirmed that the grain size in the Cr-rich layer was appropriate, and the magnetic permeability was constant even when there was a change in frequency.

On the other hand, in Steel types 1, 3, 4, 6, 7, and 8 in which the alloy components were not satisfied, it could be confirmed that the grain size in the Cr-rich layer was not appropriate, and the change in magnetic permeability due to the change in frequency was large.

In addition, in Steel types 10, 11, and 12 in which the manufacturing process conditions were not satisfied, it could be confirmed that the grain size in the Cr-rich layer was not appropriate, and the change in magnetic permeability due to the change in frequency was large.

The present invention is not limited to the exemplary embodiments, but may be prepared in various different forms, and it will be apparent to those skilled in the art to which the present invention pertains that the exemplary embodiments may be implemented in other specific forms without departing from the spirit or essential feature of the present invention. Therefore, it is to be understood that the exemplary embodiments described hereinabove are illustrative rather than restrictive in all aspects.

[Description of symbols]

100: Non-oriented electrical steel sheet, 11: Steel sheet substrate,
12: Cr-rich layer, 20: Insulating layer

**Claims**

1. A non-oriented electrical steel sheet comprising, by wt%: 2.5 to 3.8% of Si, 0.1 to 1.5% of Al, 0.1 to 2.0% of Mn, 0.01 to 0.15% of Cr, and a balance of Fe and inevitable impurities, wherein the non-oriented electrical steel sheet satisfies the following Expression 1,

   the non-oriented electrical steel sheet includes a Cr-rich layer formed to have a thickness of 1/50 or less of the total thickness of the steel sheet in an inner direction of the steel sheet from a surface of the steel sheet, and a substrate, and
   an average grain diameter in the Cr-rich layer is 50 to 95% of an average grain diameter in the substrate,

   [Expression 1]

   $$[Cr] > ([Al] + [Mn])/[Si]/10$$

   (in Expression 1, [Cr], [Al], [Mn], and [Si] represent contents (wt%) of Cr, Al, Mn, and Si, respectively).

2. The non-oriented electrical steel sheet of claim 1, further comprising one or more of 0.005 to 0.08 wt% of P, 0.01 to 0.08 wt% of Sn, and 0.005 to 0.05 wt% of Sb.

3. The non-oriented electrical steel sheet of claim 1, further comprising one or more of 0.0040 wt% or less of C, 0.0040 wt% or less of S, 0.0040 wt% or less of N, and 0.0040 wt% or less of Ti.

4. The non-oriented electrical steel sheet of claim 1, further comprising one or more of 0.03 wt% or less of Mo, 0.0050 wt% or less of B, 0.0050 wt% or less of V, 0.0050 wt% or less of Ca, 0.0050 wt% or less of Nb, and 0.0050 wt% or less of Mg.

**5.** The non-oriented electrical steel sheet of claim 1, further comprising an insulating layer positioned on the surface of the steel sheet.

**6.** The non-oriented electrical steel sheet of claim 1, wherein:
a frequency dependence ($\alpha$) of a magnetic permeability is -5 or more when measured in a range of 200 Hz to 800 Hz.

**7.** The non-oriented electrical steel sheet of claim 1, wherein:
a resistivity of the non-oriented electrical steel sheet is 45 $\mu\Omega\cdot$cm or more.

**8.** A method for manufacturing a non-oriented electrical steel sheet, the method comprising:

manufacturing a hot-rolled sheet by hot rolling a slab including, by wt%: 2.5 to 3.8% of Si, 0.1 to 1.5% of Al, 0.1 to 2.0% of Mn, 0.01 to 0.15% of Cr, and a balance of Fe and inevitable impurities, and satisfying the following Expression 1;
manufacturing a cold-rolled sheet by cold rolling the hot-rolled sheet; and
subjecting the cold-rolled sheet to final annealing,
wherein in the manufacturing of the cold-rolled sheet, a maximum rolling rate is 10 m/s or more, and a temperature of a surface of the steel sheet is held at 150°C or higher for 3 minutes or longer, and
in the final annealing, the cold-rolled sheet is cooled at a cooling rate of 10 to 40°C/s up to 700°C after a soaking temperature,

$$[\text{Expression 1}]$$

$$[Cr] > ([Al] + [Mn])/[Si]/10$$

(in Expression 1, [Cr], [Al], [Mn], and [Si] represent contents (wt%) of Cr, Al, Mn, and Si, respectively).

**9.** The method of claim 8, further comprising, before the manufacturing of the hot-rolled sheet, heating the slab to 1,100 to 1,250°C.

**10.** The method of claim 8, further comprising, after the manufacturing of the hot-rolled sheet, annealing the hot-rolled sheet at 850 to 1,150°C.

**11.** The method of claim 8, wherein:
in the manufacturing of the cold-rolled sheet, a reduction ratio is 70 to 95%.

**12.** The method of claim 8, wherein:
in the final annealing, soaking is performed at 800 to 1,070°C.

# FIG. 1

100

## INTERNATIONAL SEARCH REPORT

| International application No. |
|---|
| **PCT/KR2021/019221** |

**A. CLASSIFICATION OF SUBJECT MATTER**

**C21D 8/12**(2006.01)i; **C22C 38/34**(2006.01)i; **C22C 38/38**(2006.01)i; **C22C 38/00**(2006.01)i; **C22C 38/28**(2006.01)i; **C22C 38/22**(2006.01)i; **C22C 38/26**(2006.01)i; **H01F 1/147**(2006.01)i

According to International Patent Classification (IPC) or to both national classification and IPC

**B. FIELDS SEARCHED**

Minimum documentation searched (classification system followed by classification symbols)

C21D 8/12(2006.01); C21D 1/30(2006.01); C21D 9/00(2006.01); C22C 38/00(2006.01); C22C 38/02(2006.01); C22C 38/14(2006.01); C22C 38/34(2006.01); C22C 38/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성 전기강판(non-oriented electrical steel sheet), 크롬(Cr), 냉각(cooling), 소둔(annealing), 규소(Si), 망간(Mn), 알루미늄(Al), 농화층(concentrated layer)

**C. DOCUMENTS CONSIDERED TO BE RELEVANT**

| Category* | Citation of document, with indication, where appropriate, of the relevant passages | Relevant to claim No. |
|---|---|---|
| A | KR 10-2009393 B1 (POSCO) 09 August 2019 (2019-08-09)<br>See claims 1 and 10. | 1-12 |
| A | JP 2020-169369 A (NIPPON STEEL CORP.) 15 October 2020 (2020-10-15)<br>See paragraphs [0013] and [0037] and claims 1-2. | 1-12 |
| A | KR 10-2020-0065141 A (POSCO) 09 June 2020 (2020-06-09)<br>See paragraph [0167] and claim 1. | 1-12 |
| A | KR 10-2020-0035754 A (POSCO) 06 April 2020 (2020-04-06)<br>See paragraphs [0083]-[0084] and claim 1. | 1-12 |
| A | JP 2018-021241 A (NIPPON STEEL & SUMITOMO METAL) 08 February 2018 (2018-02-08)<br>See claims 1 and 6. | 1-12 |

☐ Further documents are listed in the continuation of Box C.　　☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 April 2022** | **19 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/019221**

| Patent document cited in search report | | | Publication date (day/month/year) | Patent family member(s) | | | Publication date (day/month/year) |
|---|---|---|---|---|---|---|---|
| KR | 10-2009393 | B1 | 09 August 2019 | CN | 111556904 | A | 18 August 2020 |
| | | | | EP | 3733907 | A1 | 04 November 2020 |
| | | | | JP | 2021-509153 | A | 18 March 2021 |
| | | | | KR | 10-2019-0078385 | A | 04 July 2019 |
| | | | | US | 2020-0332387 | A1 | 22 October 2020 |
| | | | | WO | 2019-132132 | A1 | 04 July 2019 |
| JP | 2020-169369 | A | 15 October 2020 | None | | | |
| KR | 10-2020-0065141 | A | 09 June 2020 | KR | 10-2164113 | B1 | 13 October 2020 |
| | | | | WO | 2020-111640 | A1 | 04 June 2020 |
| KR | 10-2020-0035754 | A | 06 April 2020 | CN | 113195769 | A | 30 July 2021 |
| | | | | EP | 3859039 | A1 | 04 August 2021 |
| | | | | JP | 2022-501513 | A | 06 January 2022 |
| | | | | KR | 10-2120276 | B1 | 08 June 2020 |
| | | | | US | 2022-0033940 | A1 | 03 February 2022 |
| | | | | WO | 2020-067624 | A1 | 02 April 2020 |
| JP | 2018-021241 | A | 08 February 2018 | JP | 6794704 | B2 | 02 December 2020 |

Form PCT/ISA/210 (patent family annex) (July 2019)